# EUROPÄISCHE PATENTSCHRIFT

(11) **EP 4 091 757 B1**
(45) Veröffentlichungstag und Bekanntmachung des Hinweises auf die Patenterteilung: **25.12.2024**
(21) Anmeldenummer: 22162360.6
(22) Anmeldetag: 16.03.2022
(51) Int. Cl.: B23K 26/00, B23K 26/073, B23K 26/082, B23K 26/53, B23K 26/354, B23K 103/00

(54) **VERFAHREN ZUR BEHANDLUNG WENIGSTENS EINER SCHICHT ODER EINES BEREICHS EINES BAUTEILS**
METHOD FOR TREATING AT LEAST ONE LAYER OR PART OF A COMPONENT
PROCÉDÉ DE TRAITEMENT D'AU MOINS UNE COUCHE OU UNE ZONE D'UN COMPOSANT

(30) Priorität: 13.04.2021 DE 102021203609
(43) Veröffentlichungstag der Anmeldung: 23.11.2022
(73) Patentinhaber: Robert Bosch GmbH, 70442 Stuttgart (DE)
(72) Erfinder: Michalowski, Andreas, 71272 Renningen (DE); Ramsayer, Reiner, 71277 Rutesheim (DE); Nyenhuis, Fabian, 31079 Sibbesse (DE)

(56) Entgegenhaltungen:
- WO-A1-2019/236616
- US-A1- 2009 280 623
- US-A1- 2017 189 999

## Beschreibung

### Technisches Gebiet

Die Erfindung betrifft ein Verfahren zur Behandlung wenigstens einer Schicht oder eines Bereichs eines Bauteil mittels eines Laserstrahls zur Erzeugung einer amorphen Schicht oder eines amorphen Bereichs entsprechend dem Oberbegriff des Anspruchs 1 (siehe z.B. WO 2019/236616 A1).

### Stand der Technik

Ein Verfahren zur Behandlung wenigstens einer Schicht eines Bauteils mit den Merkmalen des Oberbegriffs des Anspruchs 1 ist aus der DD 217 738 A1 bekannt. Bei dem bekannten Verfahren, das zur Erzeugung einer amorphen Schicht an der Oberfläche des metallischen Bauteils dient, wird ein Laserstrahl über die Oberfläche des Bauteils geführt und das Material des Bauteils an der Oberfläche aufgeschmolzen. Zur Erzeugung der amorphen Schicht ist es erforderlich, dass beim Erstarren der aufgeschmolzenen Schicht sich die Atome nicht in einer regelmäßigen Kristallstruktur anordnen können und lediglich über eine Nahordnung, nicht aber über eine Fernordnung verfügen. Dazu ist es erforderlich, dass eine sehr hohe Abkühlgeschwindigkeit von mehr als 10⁶ Kelvin pro Sekunde erzielt wird. Hierzu schlägt es aus der genannten Schrift bekannte Verfahren vor, das Bauteil während seiner Oberflächenbehandlung zumindest im Bereich der behandelten Oberfläche mit Wasser als Kühlmedium zu überdecken, um die benötigte hohe Abkühlgeschwindigkeit bzw. den benötigten Wärmeabfluss über das Wasser zu erzielen. Das aus der genannten Schrift bekannte Verfahren benötigt durch die erforderliche Kühlung somit einen relativ hohen vorrichtungstechnischen Aufwand.

Aus der WO 2019/236616 A1 ist eine Laserbearbeitungsvorrichtung zur Bearbeitung eines Werkstückes bekannt. Die US 2009/0280623 A1 offenbart ein Verfahren zur Herstellung eines Halbleiter-Wafers. Aus der US 2017/0189999 A1 ist ein Verfahren und eine Vorrichtung zur Unterbrechung der Ausbreitung eines einfallenden Risses durch ein transparentes Material bekannt.

### Offenbarung der Erfindung

Das erfindungsgemäße Verfahren zur Behandlung wenigstens einer Schicht oder eines Bereichs eines Bauteils zur Erzeugung einer amorphen Schicht oder eines amorphen Bereichs in dem Bauteil mit den Merkmalen des Anspruchs 1 hat den Vorteil, dass es dazu verwendet werden kann, nahezu beliebige 3-dimensionale-Strukturen bzw. Formen von amorph erstarrtem Material in einem für die Wellenlänge des Laserstrahls transparenten Material eines Bauteils auszubilden, ohne dass hierzu zusätzliche Kühlmaßnahmen zur Erhöhung der Abkühlgeschwindigkeit beim Erstarren des durch den Laserstrahl aufgeschmolzenen Materials erforderlich sind.

Hierzu schlägt es das erfindungsgemäße Verfahren gemäß der Lehre des Anspruchs 1 vor, dass der Laserstrahl Laserimpulse mit einer Repetitionsrate im Megaherz- oder Gigaherz-Bereich aufweist, dass als Material ein für die Wellenlänge des Laserstrahls transparentes Material verwendet wird, und dass der Einwirkbereich des Laserstrahls in dem Bauteil durch eine Festverlegung des Fokusbereichs des Laserstrahls in Bezug zur einer in Ausbreitungsrichtung des Laserstrahls im Bauteil verlaufenden Richtung erfolgt.

Der Erfindung liegt die Idee zugrunde, den Energieeintrag in das Material des Bauteils beim Aufschmelzen des Materials derart gering zu halten bzw. zeitlich zu beschränken, dass auch ohne Kühlmaßnahmen eine hinreichend große Abkühlgeschwindigkeit erzielt wird, die zu einer amorphen Erstarrung des Materials führt. Dies wird dadurch bewirkt, dass durch den geringen Energieeintrag auch nur eine relativ geringe Wärmeenergiemenge abzuführen ist. Zur Erzeugung der amorphen Erstarrung des Materials ist es erforderlich, dass beim Erstarren der aufgeschmolzenen Schicht oder des aufgeschmolzenen Bereichs sich die Atome nicht in einer regelmäßigen Kristallstruktur anordnen können, sodass lediglich eine Nahordnung, nicht aber eine Fernordnung der Atome vorhanden ist. Dazu ist es erforderlich, dass eine sehr hohe Abkühlgeschwindigkeit von mehr 10⁶ K pro Sekunde erzielt wird. Dies wird durch die räumlich stark lokalisierte Absorption und Wärmeeinbringung bei der kurzzeitigen Anwendung einer sehr hohen Repetitionsrate der Laserimpulse ermöglicht, wodurch Abkühlraten von mehr als 10⁶ K pro Sekunde, vorzugsweise mehr als 10⁹ K pro Sekunde gegenüber dem restlichen, nicht erwärmten Material erzielbar sind.

Das von dem Laserstrahl aufgeschmolzene Volumen wird durch das nichtlineare fokale Volumen bestimmt, welches sich durch die räumliche und zeitliche Intensitätsverteilung des Laserpulses beeinflussen lässt. Somit ist eine Energiedeponierung und Erzeugung eines amorphen Volumens auch unterhalb des Abbe-Limits möglich. Die erwähnten aufgeschmolzenen und anschließend erstarrten Volumina weisen einen Durchmesser, abhängig von der Wellenlänge des Laserstrahls, von einigen 100 nm bis wenigen Mikrometern, typischerweise zwischen 500 nm bis 5 µm, auf. Von Vorteil ist es, wenn beim Relativbewegen des Laserstrahls zum Bauteil die laterale Abweichung weniger als 10 µm beträgt. Dabei ist eine Nachführung der Fokusebene (in einer in Ausbreitungsrichtung des Laserstrahls verlaufenden Richtung) bei transparenten Materialien nur bedingt bzw. nicht notwendig, da bei vielen transparenten Materialien das absorbierende Volumen bei der Erstarrung intransparent oder zumindest zeitlich intransparent wird, und die Absorption nachfolgender Pulse bereits an den Grenzen des Bearbeitungsvolumens stattfindet, wodurch dieses in Richtung des Laserstrahls wächst.

Vorteilhafte Weiterbildungen des erfindungsgemäßen Verfahrens zur Behandlung wenigstens einer Schicht oder eines Bereichs eines Bauteils sind in den Unteransprüchen aufgeführt.

Zur Erzeugung einer 3-dimensionalen amorphen Struktur innerhalb des Bauteils kann es vorgesehen sein, dass der Laserstrahl nacheinander auf verschiedene, in Ausbreitungsrichtung des Laserstrahls verlaufende Schichten oder Bereiche im Bauteil einwirkt. Dies ist vor allem dann vorteilhaft, wenn bei der amorphen Erstarrung des Materials dieses nicht intransparent wird. Außerdem wird dadurch eine präzise Einkopplung der Energie in den aufzuschmelzenden Bereich ermöglicht.

Hierzu ist es besonders bevorzugt vorgesehen, dass der Laserstrahl zunächst auf die von der Bauteiloberfläche auf der Seite des Laserstrahls am weitesten entfernte Schicht oder Bereich einwirkt und die nachfolgenden Schichten oder Bereiche, auf die der Laserstrahl einwirkt, sukzessiv einen geringeren Abstand zur Bauteiloberfläche aufweisen.

Besonders bevorzugt sind Repetitionsraten der Laserimpulse zwischen 50 Megahertz und 20 Gigahertz, vorzugsweise 1,6 Gigahertz.

Weiterhin finden bevorzugt Pulspakete mit 10 bis 1000 Laserimpulsen, vorzugsweise zwischen 50 bis 200 Laserimpulsen, Verwendung.

Der Abstand zwischen zwei Laserimpulsen beträgt zwischen 10 Pikosekunden und 100 Nanosekunden, vorzugsweise etwa 500 Pikosekunden.

Bevorzugt ist es darüber hinaus, wenn die Dicke einer aufgeschmolzenen Schicht oder eines aufgeschmolzenen Bereichs des Bauteils weniger als 10 µm, vorzugsweise weniger als 2 µm, beträgt. Dadurch lassen sich über das gesamte Volumen homogene amorphe Bereiche bzw. Schichten erzielen.

Weiterhin ist es von Vorteil, wenn der Fokusdurchmesser des Laserstrahls zwischen 1 µm und 1000 µm, vorzugsweise zwischen 100 µm und 1000 µm, beträgt.

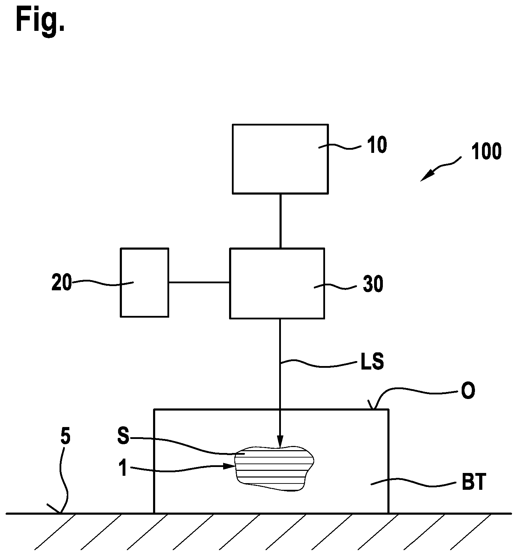

### Kurze Beschreibung der Zeichnung

Die einzige Figur zeigt in einer schematischen Darstellung eine Vorrichtung zur Erzeugung amorpher Volumina an einem Bauteil.

### Ausführungsform der Erfindung

In der einzigen Figur ist eine Vorrichtung 100 zur Erzeugung wenigstens eines amorphen Volumens 1 im Bereich eines Bauteils BT dargestellt. Das Bauteil BT ist rein beispielhaft als plattenförmiges bzw. ebenes Bauteil BT dargestellt, das auf einer Arbeitsfläche 5 liegt bzw. positioniert ist.

Zur Erzeugung des amorphen Volumens 1 innerhalb des Bauteils BT weist die Vorrichtung 100 eine Laserstrahleinrichtung 10 auf, die in Form eines Ultrakurzpulslasers ausgebildet ist. Die Laserstrahleinrichtung 10 erzeugt einen Laserstrahl LS mit Pulspaketen bei einer Repetitionsrate von etwa 1,6 Gigahertz. Die Pulspakete umfassen dabei jeweils etwa zwischen 20 und 1000 Laserimpulsen, vorzugsweise etwa zwischen 50 und 250 Laserimpulsen. Die Pulsdauer der Laserimpulse beträgt zwischen 100 Femtosekunden und 50 Pikosekunden.

Das Bauteil BT besteht aus einem für die Wellenlänge des Laserstrahls LS transparentem Material. Gedacht ist hier insbesondere an Gläser bzw. monokristalline Isolatoren und/oder Halbleiter wie kristallines Siliziumoxid, das der Herstellung von Quarz-Wafern dient. Auch sind Anwendungen bei Alkalimetallen denkbar, die teilweise für UV-Licht transparent sind.

Der Energieeintrag, der beispielsweise in der Größenordnung von einem Nanojoule bis einigen Mikrojoule pro Laserimpuls liegt, erzeugt ein amorphes Volumen mit einem Durchmesser von weniger als 10 µm.

Die Vorrichtung 10 umfasst darüber hinaus eine Verstelleinrichtung 20 zur Relativbewegung zwischen dem Laserstrahl LS und der Oberfläche O des Bauteils BT, die als 5-Achs-Verstelleinrichtung 20 ausgebildet ist. Das Bauteil BT bzw. die Oberfläche O des Bauteils BT ist während der Einwirkung des Laserstrahls LS in Wirkverbindung mit der umgebenden Luft oder ggf. mit einer Schutzgasatmosphäre angeordnet. Weiterhin umfasst die Vorrichtung 100 eine Optikeinrichtung 30 zur Beeinflussung bzw. Führung des Laserstrahls LS, üblicherweise in Form eines Scanners.

Zur Erzeugung des Volumens 1 wird er Energieeintrag durch den Laserstrahl LS im Bereich derjenigen Schicht S des Materials des Bauteils BT begonnen, der von der Oberfläche O des Bauteils BT auf der dem Laserstrahl LS zugewandten Seite bzw. in Ausbreitungsrichtung des Laserstrahls LS betrachtet den größten Abstand aufweist, d.h. im Bereich der tiefsten Schicht S. In diesem Bereich findet dann, je nach lateraler Ausdehnung der zu erzeugenden amorphen Schicht S, anschließend eine entsprechende seitliche Bewegung des Laserstrahls LS relativ zum Bauteil BT statt. Falls das Material des Bauteils BT beim amorphen Erstarren intransparent wird, baut sich nach er Erstarrung und anschließendem wiederholten Energieeintrag die 3-dimensionale Struktur des Volumens 1 auf der zuvor erstarrten Schicht S in Richtung zur Oberfläche O aus. Alternativ kann der Fokus auch auf den Bereich der in Richtung der Oberfläche O nächstliegenden Schicht S eingestellt werden.

## Patentansprüche

1. Verfahren zur Behandlung wenigstens einer Schicht (S) oder eines Bereichs eines Bauteils (BT), bei dem ein Laserstrahl (LS) auf die wenigstens eine Schicht (S) oder den Bereich einwirkt und das Material des Bauteils (BT) im Einwirkbereich des Laserstrahls (LS) derart aufschmelzt, dass bei oder durch Abkühlung das aufgeschmolzene Material amorph erstarrt,
**dadurch gekennzeichnet,**
**dass** der Laserstrahl (LS) Laserimpulse mit einer Repetitionsrate im Megahertz- oder Gigahertz-Bereich aufweist, dass als Material für das Bauteil (BT) ein für die Wellenlänge des Laserstrahls (LS) transparentes Material verwendet wird, und dass der Einwirkbereich des Laserstrahls (LS) durch eine Festlegung des Fokusbereichs des Laserstrahls (LS) in Richtung einer in Ausbreitungsrichtung des Laserstrahls (LS) im Bauteil (BT) verlaufenden Richtung erfolgt.

2. Verfahren nach Anspruch 1,
**dadurch gekennzeichnet,**
**dass** zur Erzeugung einer 3-dimensionalen amorphen Struktur bzw. Volumens (1) im Bauteil (BT) der Laserstrahl (LS) nacheinander auf verschiedene, in Ausbreitungsrichtung des Laserstrahls (LS) verlaufende Schichten (S) oder Bereiche im Bauteil (BT) einwirkt.

3. Verfahren nach Anspruch 2,
**dadurch gekennzeichnet,**
**dass** der Laserstrahl (LS) zunächst auf die von der Oberfläche (O) des Bauteils (BT) auf der Seite des Laserstrahls (LS) am weitesten entfernte Schicht (S) oder Bereich einwirkt und die nachfolgenden Schichten (S) oder Bereiche, auf die der Laserstrahl (LS) einwirkt, sukzessiv einen geringeren Abstand zur Oberfläche (O) des Bauteils (BT) aufweisen.

4. Verfahren nach einem der Ansprüche 1 bis 3,
**dadurch gekennzeichnet,**
**dass** die Repetitionsrate zwischen 50 Megahertz und 20 Gigahertz, vorzugsweise 1,6 Gigahertz, beträgt.

5. Verfahren nach einem der Ansprüche 1 bis 4,
**dadurch gekennzeichnet,**
**dass** Pulspakete mit 10 bis 1000 Laserimpulsen erzeugt werden, vorzugsweise Pulspakete mit 50 bis 250 Laserimpulsen.

6. Verfahren nach einem der Ansprüche 1 bis 5,
**dadurch gekennzeichnet,**
**dass** der Abstand zwischen zwei Laserimpulsen zwischen 10 Pikosekunden und 100 Nanosekunden, vorzugsweise etwa 500 Pikosekunden, beträgt.

7. Verfahren nach einem der Ansprüche 1 bis 6,
**dadurch gekennzeichnet,**
**dass** die Dicke einer aufgeschmolzenen Schicht (S) oder eines aufgeschmolzenen Bereichs des Bauteils (BT) weniger als 10 Mikrometer, vorzugsweise weniger als 2 Mikrometer, beträgt.

8. Verfahren nach einem der Ansprüche 1 bis 7,
**dadurch gekennzeichnet,**
**dass** der Fokusdurchmesser des Laserstrahls (LS) zwischen 1µm und 1000µm, vorzugsweise zwischen 100µm und 1000µm beträgt.

## Claims

1. Method for treating at least one layer (S) or a region of a component (BT), in the course of which a laser beam (LS) acts on the at least one layer (S) or the region and melts the material of the component (BT) in the region of action of the laser beam (LS) in such a way that the melted material amorphously solidifies as it cools down or as a result of cooling down,
**characterized**
**in that** the laser beam (LS) comprises laser pulses with a repetition rate in the megahertz or gigahertz range, in that the material used for the component (BT) is a material which is transparent to the wavelength of the laser beam (LS), and in that the region of action of the laser beam (LS) is effected by establishing the focus region of the laser beam (LS) in the direction of a direction running in the propagation direction of the laser beam (LS) in the component (BT).

2. Method according to Claim 1,
**characterized**
**in that**, to create a 3-dimensional amorphous structure or volume (1) in the component (BT), the laser beam (LS) acts on various layers (S) or regions in the component (BT) in succession that run in the propagation direction of the laser beam (LS).

3. Method according to Claim 2,
**characterized**
**in that** the laser beam (LS) firstly acts on the layer (S) or region furthest away from the surface (O) of the component (BT) on the laser beam (LS) side, and the subsequent layers (S) or regions on which the laser beam (LS) acts are at successively smaller spacings from the surface (O) of the component (BT).

4. Method according to one of Claims 1 to 3,
**characterized**
**in that** the repetition rate is between 50 megahertz and 20 gigahertz, preferably 1.6 gigahertz.

5. Method according to one of Claims 1 to 4,
**characterized**
**in that** pulse packets of 10 to 1000 laser pulses are generated, preferably pulse packets of 50 to 250 laser pulses.

6. Method according to one of Claims 1 to 5,
**characterized**
**in that** the interval between two laser pulses is between 10 picoseconds and 100 nanoseconds, preferably about 500 picoseconds.

7. Method according to one of Claims 1 to 6,
**characterized**
**in that** the thickness of a melted layer (S) or a melted region of the component (BT) is less than 10 micrometres, preferably less than 2 micrometres.

8. Method according to one of Claims 1 to 7,
**characterized**
**in that** the focus diameter of the laser beam (LS) is between 1 µm and 1000 µm, preferably between 100 µm and 1000 µm.

## Revendications

1. Procédé de traitement d'au moins une couche (S) ou d'une zone d'un composant (BT), dans lequel un faisceau laser (LS) agit sur l'au moins une couche (S) ou zone et fait fondre le matériau du composant (BT) dans la zone d'action du faisceau laser (LS) de telle sorte que, lors du refroidissement ou par refroidissement, le matériau fondu se solidifie sous forme amorphe,
**caractérisé en ce que**
le faisceau laser (LS) présente des impulsions laser avec un taux de répétition dans la plage des mégahertz ou des gigahertz, **en ce qu'**un matériau transparent pour la longueur d'onde du faisceau laser (LS) est utilisé en tant que matériau pour le composant (BT), et **en ce que** la zone d'action du faisceau laser (LS) s'effectue par une détermination de la zone focale du faisceau laser (LS) en direction d'une direction s'étendant dans la direction de propagation du faisceau laser (LS) dans le composant (BT).

2. Procédé selon la revendication 1,
**caractérisé en ce que**
pour produire une structure ou un volume amorphe tridimensionnel (1) dans le composant (BT), le faisceau laser (LS) agit successivement sur différentes couches (S) ou zones dans le composant (BT), s'étendant dans la direction de propagation du faisceau laser (LS).

3. Procédé selon la revendication 2,
**caractérisé en ce que**
le faisceau laser (LS) agit d'abord sur la couche (S) ou la zone la plus éloignée de la surface (O) du composant (BT) du côté du faisceau laser (LS) et les couches (S) ou zones suivantes, sur lesquelles le faisceau laser (LS) agit, présentent successivement une distance plus faible par rapport à la surface (O) du composant (BT).

4. Procédé selon l'une quelconque des revendications 1 à 3,
**caractérisé en ce que**
le taux de répétition est compris entre 50 mégahertz et 20 gigahertz, de préférence 1,6 gigahertz.

5. Procédé selon l'une quelconque des revendications 1 à 4,
**caractérisé en ce que**
des paquets d'impulsions avec 10 à 1 000 impulsions laser sont générés, de préférence des paquets d'impulsions avec 50 à 250 impulsions laser.

6. Procédé selon l'une quelconque des revendications 1 à 5,
**caractérisé en ce que**
l'intervalle entre deux impulsions laser est compris entre 10 picosecondes et 100 nanosecondes, de préférence environ 500 picosecondes.

7. Procédé selon l'une quelconque des revendications 1 à 6,
**caractérisé en ce que**
l'épaisseur d'une couche fondue (S) ou d'une zone fondue du composant (BT) est inférieure à 10 micromètres, de préférence inférieure à 2 micromètres.

8. Procédé selon l'une quelconque des revendications 1 à 7,
**caractérisé en ce que**
le diamètre de foyer du faisceau laser (LS) est compris entre 1 µm et 1 000 µm, de préférence entre 100 µm et 1 000 µm.
